# EUROPÄISCHE PATENTSCHRIFT

(11) **EP 3 242 828 B1**
(45) Veröffentlichungstag und Bekanntmachung des Hinweises auf die Patenterteilung: **09.01.2019**
(21) Anmeldenummer: 15766535.7
(22) Anmeldetag: 22.09.2015
(51) Int. Cl.: B62D 1/189, B62D 1/16

(54) **LENKSÄULE MIT ADAPTIERBARER SCHWENKLAGERUNG**
STEERING COLUMN HAVING AN ADAPTABLE PIVOT SUPPORT
COLONNE DE DIRECTION À PALIER PIVOTANT ADAPTABLE

(30) Priorität: 08.01.2015 DE 102015000029
(43) Veröffentlichungstag der Anmeldung: 15.11.2017
(73) Patentinhaber: ThyssenKrupp Presta AG, 9492 Eschen (LI); thyssenkrupp AG, 45143 Essen (DE)
(72) Erfinder: GSTÖHL, Eric, 9493 Mauren (LI); HAUSKNECHT, Sven, A-6850 Dornbirn (AT); LOOS, Stefan-Hermann, 9426 Lutzenberg (CH); PASCH, Frank, 9472 Grabs (CH); GEISSLER, Christian, CH-9470 Buchs (CH)
(74) Vertreter: thyssenkrupp Intellectual Property GmbH
(86) Internationale Anmeldenummer: PCT/EP2015/071745
(87) Internationale Veröffentlichungsnummer: WO 2016/110336

(56) Entgegenhaltungen:
- EP-A1- 1 847 440
- FR-A1- 3 004 154

## Beschreibung

Die vorliegende Erfindung betrifft eine Lenksäule mit den Merkmalen des Oberbegriffs des Anspruchs 1.

Lenksäulen haben in Kraftfahrzeugen vielfältige Funktionen. Zum einen dienen sie zur Befestigung des Lenkrades und zur Lagerung der Lenkwelle oder Lenkspindel an der Karosserie. Sie dienen auch zur Befestigung von Anbauteilen wie z. B. einer Diebstahlsicherung oder von Bedienelementen. Teilweise sind die Lenksäulen auch mechanisch oder elektrisch in Axialrichtung und Vertikalrichtung verstellbar, um die Position des Lenkrades an die Anforderungen des Fahrers anpassen zu können. Schließlich sollen Lenksäulen auch bei einem Aufprall des Fahrzeugs auf ein Hindernis kontrolliert nachgeben, um Aufprallenergie des Fahrers auf das Lenkrad zu absorbieren und dadurch das Verletzungsrisiko für den Fahrer zu vermindern. Bei all diesen Anforderungen wird außerdem gefordert, dass Lenksäulen einen kleinen Bauraum beanspruchen, ein geringes Gewicht aufweisen und spiel- und geräuschfrei arbeiten.

Eine Möglichkeit, Lenksäulen preiswert und leicht zu gestalten, besteht in der Verwendung von Strangpressprofilen. Strangpressprofile haben gegenüber Druckgusskomponenten den Vorteil geringer Produktionskosten.

Aus dem Stand der Technik sind deshalb bereits Lenksäulen bekannt, in denen Strangpressprofile eingesetzt werden.

Das Dokument US 8,863,609 B2 offenbart beispielsweise eine Lenksäule, bei der die Manteleinheit, genauer gesagt das äußere Mantelrohr, aus einem Strangpressprofil gefertigt ist. Diese Lenksäule weist die Besonderheit auf, dass die Spannachse für das Lösen und Blockieren der Verstellung einseitig an dem äußeren Mantelrohr angreift und nicht zu der anderen Seite des Mantelrohres durchgehend ist.

Das Dokument FR 3004154 zeigt eine Manteleinheit für eine Lenksäule, wobei die Manteleinheit aus einem Strangpressprofil hergestellt ist. Die verschiedenen erforderlichen Funktionsabschnitte sind beispielsweise Befestigungsbereiche, Führungen für die Verstellfunktion, Lagersitze und Ansatzpunkte für zusätzliche Komponenten.

Dieses Dokument zeigt auch anschaulich, dass das Lager für die Schwenkachse der Vertikalverstellung und eine etwa schraubenförmige Schlitzanordnung als energieabsorbierende so genannte Crashstruktur unmittelbar in das äußere Mantelrohr eingearbeitet sind. Dies entspricht der üblichen Bauweise von verstellbaren Lenksäulen, und es macht die Lenksäule aufwändig in der Herstellung, weil für diese Funktionselemente eigene Bearbeitungsvorgänge am Werkstück durchzuführen sind.

Aus der EP 1 847 440 A1 ist eine Lenksäule bekannt, bei der ein Schwenklager-Bauteil mittels einer Schnappverbindung lösbar am Ende des Mantelrohr befestigt werden kann. Die Verbindung kann nur an der durch die Schnappverbindung quer zur Richtung der Längsachse vorgegebenen Befestigungsstruktur erfolgen, ausschließlich an der durch die Bauform des Schwenklager-Bauteils und die Ausbildung der Befestigungsstruktur am Mantelrohr. Eine alternative Positionierung erfordert einen hohen Bearbeitungsaufwand.

Es ist deshalb Aufgabe der vorliegenden Erfindung, eine Lenksäule für ein Kraftfahrzeug zu schaffen, die einen einfachen Aufbau aufweist und mit geringerem Bearbeitungsaufwand fertigbar ist. Diese Aufgabe wird von einer Lenksäule mit den Merkmalen des Anspruchs 1 gelöst.

Gelöst wird die Aufgabe ebenfalls durch ein Verfahren zur Herstellung einer Lenksäule mit den Schritten des Anspruchs 13.

Vorgeschlagen wird eine Lenksäule für ein Kraftfahrzeug mit einem Mantelrohr und einer in dem Mantelrohr um eine Längsachse drehbar gelagerten, insbesondere in Längsrichtung teleskopierbaren Lenkspindel sowie mit Befestigungselementen zur karosserieseitigen Befestigung der Lenksäule, und mit einem Schwenklager zur Höhenverstellung der Lenksäule, wobei das Schwenklager an einem lenkradfernen Bereich der Lenksäule vorgesehen ist, das Schwenklager in einem als separatem Bauteil ausgebildeten Tragelement angeordnet oder ausgebildet ist, welches auf dem Mantelrohr an einer in Richtung der Längsachse verlaufenden Befestigungsstruktur unlösbar befestigt ist.
Erfindungsgemäß wird das Tragelement als separates Bauteil gefertigt und zur Montage an bzw. auf dem Mantelrohr bereitgestellt.
Durch die Ausgestaltung der erfindungsgemäßen Lenksäule kann das Tragelement frei auf dem Mantelrohr positioniert werden, ohne dass das Mantelrohr selbst dazu bearbeitet werden muss. Das Tragelement kann für verschiedene Lenksäulenausführungen baugleich sein. Das Tragelement ist zumindest während dem normalen Betriebszustand der Lenksäule oder des Kraftfahrzeugs unlösbar mit dem Mantelrohr verbunden. Im Fall eines Fahrzeugfrontalaufpralls, auch als Crash bezeichnet, kann eine relative Verschiebung des Mantelrohrs gegenüber dem Tragelement vorgesehen sein und eine damit vorhandene Energieabsorption auf Grund der vorhandenen Reibung zwischen Tragelement und Mantelrohr.
Die Befestigungselemente zur karosserieseitigen Befestigung der Lenksäule kann als Konsole ausgebildet sein, wobei eine solche Konsole zumindest eine Seitenwange und einen karosserieseitigen Befestigungsabschnitt aufweist. Bevorzugt weist die Konsole jedoch zwei beabstandete und im Wesentlichen parallel angeordnete Seitenwangen auf, wobei zwischen den Seitenwangen bevorzugt das Mantelrohr angeordnet ist.

Erfindungsgmäß weist das Mantelrohr eine in Richtung der Längsachse verlaufende Befestigungsstruktur auf, an der das Tragelement befestigbar ist.
Somit kann die Befestigungsstruktur in einfacher Weise in einem Strangpressvorgang durch die Herstellung des Mantelrohrs oder des Mantelrohrrohlings ausgebildet werden.
Bevorzugt ist das Mantelrohr und/oder das Tragelement als Strangpressbauteil ausgebildet. Die Befestigungsstruktur kann durch Profilkonturen des Strangpressprofils realisiert werden, welche für eine unlösbare Befestigung des Tragelements besonders geeignet sind, beispielsweise zur Ausbildung einer form-, kraft- und/oder stoffschlüssigen Verbindung.

Somit kann auf einfache und kosteneffiziente Art und Weise das Mantelrohr und/oder das Tragelement ausgebildet werden. Vor allem komplizierte Geometrien können so besonders kostengünstig hergestellt werden, beispielsweise die in Richtung der Längsachse verlaufende Befestigungsstruktur.

Eine besonders einfache und sichere Befestigung ist möglich, wenn die Befestigungsstruktur einander abgewandte Längsnuten aufweist, in die das Tragelement in montiertem Zustand eingreift. Bevorzugt greift das Tragelement in die Nuten ein und umgreift den zwischen den Nuten liegenden äußeren Abschnitt des äußeren Mantelrohrs. Dadurch bildet sich ein großflächiger Kontaktbereich, der für eine sichere Befestigung des Tragelements genutzt werden kann. Somit wird eine Schienenverbindung zwischen dem Mantelrohr und dem Tragelement geschaffen, wobei die Befestigungsstruktur zueinander passend bzw. korrespondierend ausgebildet sind. Insbesondere kann dadurch eine formschlüssige Verbindung realisiert werden, die einfach eine präzise Positionierung ermöglicht und dabei besonders zuverlässig und belastbar ist.

Insbesondere kann das Tragelement mit dem Mantelrohr verstemmt, verpresst, verschweisst oder verklebt sein. Dadurch kann eine kraft- und/oder stoffschlüssige Verbindung ausgebildet werden.

Das Verstemmen erfolgt durch plastische Umformung des Mantelrohrs und/oder des Tragelements, wodurch das Tragelement an dem Mantelrohr in einer vordefinierten Position fixiert wird. Das Verpressen kann dadurch erfolgen, dass die Befestigungsstruktur zueinander ein Übermaß aufweisen, wodurch eine Presspassung zwischen den Bauteilen ausgebildet ist. Das Verschweißen von Mantelrohr und Tragelement kann vorzugsweise durch Laserschweißen erfolgen.

Vorzugsweise weist das Tragelement Seitenwände auf, die sich in montiertem Zustand von den Nuten weg erstrecken und die mit Flachseiten parallel zu der Längsachse der Lenkspindel sowie mit kurzen Stirnseiten quer zu dieser Längsachse orientiert sind.

Dadurch ergibt sich zwischen den Seitenwänden ein für Befestigungszwecke nutzbarer Kanal.

Bevorzugt können die Seitenwände jeweils mit einer länglichen Ausnehmung versehen sein, deren Längserstreckung parallel zu der Längsachse orientiert ist. Die Ausnehmungen können beispielsweise als Langlöcher oder Bohrungen ausgebildet sein.

Bevorzugt kann in den Ausnehmungen quer zu der Längsachse eine rohrförmige Buchse angeordnet sein, die eine Schwenkachse definiert, welche als Befestigungselement für die Befestigung der Lenksäule in diesem Bereich an dem Kraftfahrzeug oder der Konsole der Lenksäule eingerichtet ist, und die in montiertem Zustand als Lagerachse für die Vertikalverschwenkung der Lenksäule im Betrieb dient.

Diese Buchse ist in den Ausnehmungen im Wesentlichen in Richtung der Längsachse verschieblich, insbesondere im Crashfall. Dabei kann die Paarung zwischen Buchse und Ausnehmung so vorgesehen sein, dass bei der relativen Verschiebung zwischen Tragelement und der Buchse Energie absorbiert wird, in dem die Buchse die Ausnehmungen des Tragelements aufweitet bzw. plastisch umformt. Durch diese kontrollierte Verlagerung des Tragelements und dem damit verbunden Mantelrohr gegenüber der Buchse die mit einer fahrzeugfesten Struktur verbunden ist, kann der Insassenschutz im Fall eines Fahrzeugfrontalaufpralls verbessert werden.

Vorzugsweise ist zwischen den Seitenwänden in dem Tragelement eine Führungsnut vorgesehen ist, in der ein Gleitstein mit Reibung geführt ist. Die Reibung ermöglicht die Energieabsorption, falls sich im Crashfall der Gleitstein in der Nut bewegt.

Vorzugsweise ist die Führungsnut eine T-Nut, und der Gleitstein ist ein Nutenstein. Ebenfalls kann die Führungsnut und der Gleitstein auch mit einem Schwalbenschwanz-Profil versehen sein.

Dabei kann der Gleitstein mit einem Befestigungsmittel in der Führungsnut befestigbar sein. Vorzugsweise ist mit dem Befestigungsmittel die Reibung des Gleitsteins in der Führungsnut einstellbar. Dies ist in besonders einfacher und zuverlässiger Weise möglich, wenn das Befestigungsmittel eine Gewindeschraube ist.
Insbesondere ist eine eigenständige und separat von der Manteleinheit zu fertigende Vorrichtung zur Energieabsorption im Crashfall geschaffen, wenn der Gleitstein derart in einen Bereich zwischen den Ausnehmungen ragt, dass die Buchse, die im Betrieb karosseriefest ist, bei einer Bewegung in Richtung der Längsachse innerhalb der Ausnehmungen den Gleitstein mitnimmt. Dadurch kann der Gleitstein durch die Reibung in der Führungsnut Energie abbauen bzw. absorbieren.
Die Lenksäule umfasst bevorzugt ein inneres Mantelrohr, in dem die Lenkspindel drehbar um die Längsachse aufgenommen ist, und das Mantelrohr das innere Mantelrohr aufnimmt, wobei das Mantelrohr einen sich in Richtung der Längsachse erstreckenden Längsschlitz aufweist, wobei ein Spannapparat, der zwischen einer Freigabestellung, in der das innere Mantelrohr gegenüber dem Mantelrohr verstellbar ist, und einer Fixierstellung, in der das innere Mantelrohr gegenüber dem Mantelrohr fixiert ist, umschaltbar ist, wobei der Spannapparat eine Spannachse umfasst, die durch eine Ausnehmung im Mantelrohr quer zur Längsachse geführt ist und wobei der Längsschlitz in der Freigabestellung eine größere Breite aufweist als in der Fixierstellung.
Gelöst wird die Aufgabe weiterhin durch ein Verfahren zur Herstellung einer Lenksäule mit den Schritten des Anspruchs 13.
Entsprechend wird ein Verfahren zur Herstellung einer Lenksäule für ein Kraftfahrzeug vorgeschlagen, wobei die Lenksäule ein Mantelrohr, in dem eine Lenkspindel um eine Längsachse drehbar gelagert ist, und ein Tragelement umfasst, wobei das Mantelrohr eine in Richtung der Längsachse verlaufende, Längsnuten umfassende Befestigungsstruktur aufweist und wobei das Tragelement parallele Schienen aufweist, mit den Verfahrensschritten:
a) Bereitstellen des Mantelrohrs,
b) Einschieben des Tragelements mit seinen Schienen in die Längsnuten,
c) Positionieren des Tragelements an einer vordefinierten Längsposition,
d) Fixieren des Tragelements an der positionierten Längsposition.

Durch das erfindungsgemäße Verfahren lässt sich eine Lenksäule in schneller und kostengünstiger Art und Weise herstellen, ohne das zum Anbringen des Tragelementes gesonderte spanende Bearbeitungsschritte erforderlich sind.

Die Längsposition ist die Position in Richtung der Längsachse.

Bevorzugt weist das Verfahren folgende weitere Verfahrensschritte zur Herstellung der Lenksäule auf:
- Anfertigen eines einzelnen Rohling des Mantelrohres in einem Strangpressverfahren,
- Ablängen des einzelnen Rohlings auf eine erforderliche Bauteillänge zur Darstellung des Mantelrohrs, dass entsprechend dem zuvor genannten Verfahrensschritten zur Lenksäule komplettiert wird.

Das Mantelrohr umfasst Längsnuten, wobei diese Längsnuten unmittelbar durch das Strangpressverfahren ausgebildet sind. Dies bedeutet, dass die Längsnuten nicht nachträglich in den Rohling des Mantelrohrs durch eine zerspanende Bearbeitung eingebracht werden müssen.

Insgesamt ergeben sich auch Kostenvorteile durch die einfache modulare Bauweise und die einfache Fertigung unterschiedlicher Lenksäulen unter Verwendung von Gleichteilen im Bereich des Schwenklagers und der Energieabsorptionsvorrichtung für verschiedene Typen.

Nachfolgend wird ein Ausführungsbeispiel der vorliegenden Erfindung anhand der Zeichnung beschrieben. Es zeigen:
- Figur 1:: eine erfindungsgemäße Lenksäule in einer perspektivischen Darstellung;
- Figur 2:: die Lenksäule aus Figur 2 in einem Längsschnitt von der Seite;
- Figur 3:: die Lenksäule aus Figur 2 in einer anderen Verstellposition;
- Figur 4:: die Lenksäule aus Figur 2 und Figur 3 in zusammengeschobener Stellung nach einem Aufprall;
- Figur 5:: die Lenksäule aus Figur 1 in einer perspektivischen Ansicht von der dem Lenkrad abgewandten Seite her;
- Figur 6:: einen Querschnitt durch die Lenksäule im Bereich eines Wälzlagers;
- Figur 7:: einen perspektivischen Ausschnitt einer Lenksäulenanordnung mit separiertem inneren Mantelrohr;
- Figur 8:: einen anderen Querschnitt mit aufgesetztem Tragelement;
- Figur 9:: eine perspektivische Ansicht des äußeren Mantelrohrs mit separiertem Tragelement;
- Figur 10:: das Tragelement mit weiteren Komponenten in einer Explosionsdarstellung;
- Figur 11:: eine Darstellung entsprechend Figur 9 mit veranschaulichter Schwenkachse;
- Figur 12:: eine schematische Darstellung der Fertigung des äußeren Mantelrohres im Strangpressverfahren mit angedeuteten Trennstellen für die Auftrennung des Strangpressprofils in einzelne Rohlinge für äußere Mantelrohre;
- Figur 13:: äußere Mantelrohre in verschiedenen Längen mit Veranschaulichung der einheitlichen Lage eines Funktionsbereichs; sowie
- Figur 14:: eine Seitenansicht ähnlich Figur 13 mit der Darstellung von zwei inneren Mantelrohren, bei denen ebenfalls die Lage eines Funktionsbereichs dargestellt ist.

Gleiche oder vergleichbare Bauelemente in verschiedenen Ausführungsbeispielen tragen dieselben Bezugsziffern.

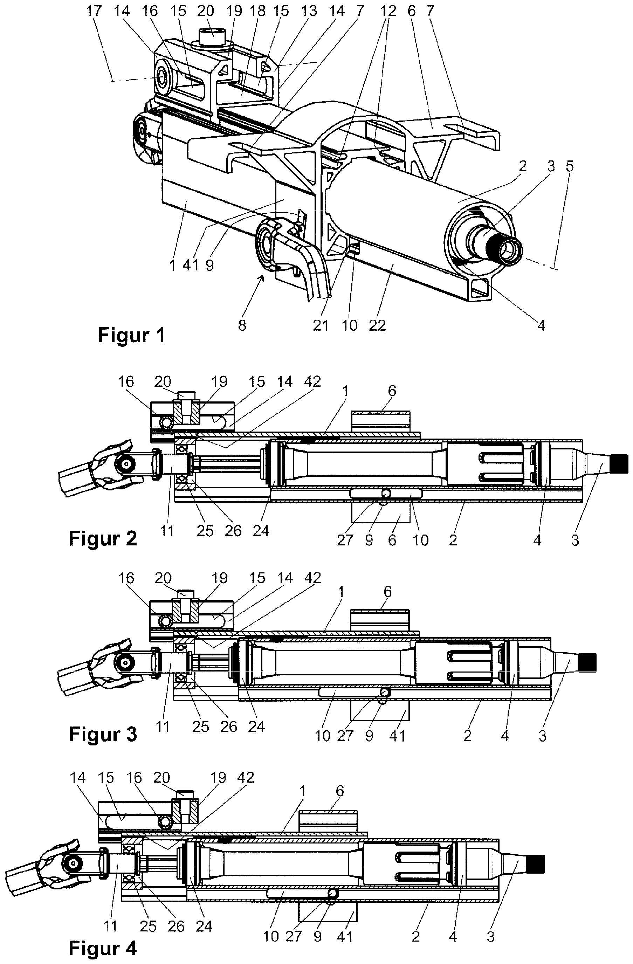

In der Figur 1 ist in perspektivischer Ansicht eine Lenksäule mit einem Mantelrohr 1 und einem inneren Mantelrohr 2 dargestellt. Dabei kann das Mantelrohr 1 auch als äußeres Mantelrohr 1 bezeichnet werden. Das innere Mantelrohr 2 trägt in seinem Inneren eine obere Lenkspindel 3, die in einem Wälzlager 4 um eine Längsachse 5 drehbar gelagert ist. Die Längsachse 5 definiert eine Axialrichtung der Lenksäulenanordnung, in der das innere Mantelrohr 2 gegenüber dem äußeren Mantelrohr 1 teleskopähnlich verschieblich ist.

Das äußere Mantelrohr 1 ist in einer Konsole 6 gehalten, die mit Ausschnitten 7 zur Befestigung der Konsole 6 an einer Fahrzeugkarosserie versehen ist. Die Konsole 6 weist zwei Seitenwangen 41 und weiter einen Spannapparat 8 auf, der die Konsole 6 quer zu der Längsachse 5 durchsetzt und der eine Höhenverstellung des äußeren Mantelrohrs 1 gegenüber der Konsole 6 und eine Axialverstellung des inneren Mantelrohrs 2 gegenüber dem äußeren Mantelrohr 1 erlaubt. Zu diesem Zweck ist die Konsole 6 mit Führungsschlitzen 9 versehen und das innere Mantelrohr 2 ist mit einem Führungsschlitz 10 versehen.

Das äußere Mantelrohr 1 trägt weiter eine untere Lenkwelle oder Lenkspindel 11, die in einem hier nicht sichtbaren Wälzlager innerhalb des äußeren Mantelrohrs 1 gelagert ist. Die obere Lenkspindel 3 und die untere Lenkspindel 11 sind drehfest, aber teleskopierbar miteinander verbunden, wie dies im Stand der Technik üblich ist.

Das äußere Mantelrohr 1 weist an seiner Oberseite einander abgewandte Längsnuten 12 auf, in die ein Tragelement 13 eingreift. Das Tragelement 13 ist in den Nuten schlittenartig in Richtung der Längsachse 5 auf das äußere Mantelrohr 1 aufgesetzt und dort, im Beispiel durch Verstemmen, befestigt. Das Tragelement 13 greift dazu klammerartig in die Nuten 12 ein und umgreift den zwischen den Nuten 12 liegenden oberen äußeren Abschnitt des äußeren Mantelrohrs 1. Die Befestigung kann alternativ oder zusätzlich durch Kleben oder Verschweißen erfolgen. Das Tragelement 13 weist weiterhin Seitenwände 14 auf, die sich in montiertem Zustand gemäß Figur 1 von den Nuten 12 nach oben erstrecken und die mit ihren Flachseiten parallel zu der Längsachse 5 sowie mit ihren kurzen Stirnseiten quer zu der Längsachse 5 orientiert sind. Die Seiten 14 sind jeweils mit einer länglichen Ausnehmung 15 versehen, deren Längserstreckung parallel zu der Längsachse 5 orientiert ist. In den Ausnehmungen 15 quer zu der Längsachse 5 ist eine rohrförmige Buchse 16 angeordnet, die eine Schwenkachse 17 definiert. Die Schwenkachse 17 ist am Kraftfahrzeug befestigt und nach Montage der Lenksäulenanordnung in einem Kraftfahrzeug im Wesentlichen quer zu der Fahrtrichtung und horizontal ausgerichtet. Die Schwenkachse 17 dient als Lagerachse für die Vertikalverschwenkung, auch Höhenverstellung genannt, der Lenksäule im Betrieb.

Zwischen den Seiten 14 ist in dem Tragelement 13 eine T-Nut 18 vorgesehen, die sich parallel zu der Längsachse 5 erstreckt. Die T-Nut 18 trägt in ihrem inneren freien Querschnitt einen Nutenstein 19, der mit einer Gewindeschraube 20 in dem Führungselement befestigbar ist.

Das äußere Mantelrohr 1 weist an seiner Unterseite, die auch beim Einbau in ein Fahrzeug nach unten weist, einen Längsschlitz 21 auf, in dem ein nach unten weisender Steg 22, der in Längsrichtung der Längsachse 5 an der Unterseite des inneren Mantelrohres 2 beim Strangpressverfahren für das innere Mantelrohr 2 mit angeformt ist, axial geführt ist. Im Betrieb ist das innere Mantelrohr 2 in dem äußeren Mantelrohr 1 verschiebbar zum Zwecke der Axialverstellung der Lenksäule, solange der Spannapparat 8 gelöst ist und sich somit in einer Freigabestellung befindet. Bei gespanntem Spannapparat 8 wird das äußere Mantelrohr 1 und somit der Längsschlitz 21 zusammengezogen und das innere Mantelrohr 2 dort geklemmt, um die gewählte Axialposition zu fixieren. Eine Breite B des Längsschlitzes 21 wird beim Spannen des Spannapparates 8 reduziert. Die Breite entspricht der Ausdehnung des Längsschlitzes 21 in Richtung der Spannachse 27.

Das innere Mantelrohr 2 weist weiter einen kreisrunden inneren Querschnitt auf, der unmittelbar als Sitz für das Wälzlager 4 dienen kann. Vorzugsweise ist ein Wälzlager 4 mit einem Presssitz in das innere Mantelrohr 2 eingesetzt und lagert das fahrerseitige Ende der oberen Lenkspindel 3 drehbar.

In der Figur 2 ist die Lenksäule aus Figur 1 in einem Längsschnitt von der Seite dargestellt.

Die Figur 2 zeigt den inneren Aufbau der Lenksäule, der ein zweites Wälzlager 24 zur Lagerung des lenkradabgewandten Endes der oberen Lenkspindel 3 umfasst. Das zweite Wälzlager 24 ist ebenso wie das erste Wälzlager 4 in das innere Mantelrohr 2 eingesetzt. Es ist weiter dargestellt, wie die untere Lenkspindel 11 in die obere Lenkspindel 3 eingreift. Die beiden Bauelemente weisen jeweils einen unrunden, beispielsweise kleeblattförmigen, und zueinander spielfrei passenden Querschnitt auf, so dass sie drehfest, aber axial verschieblich und teleskopierbar ineinander geführt sind. Aufgrund dieser Führung benötigt die untere Lenkspindel 11 nur ein Wälzlager zur drehbaren Lagerung. Das Wälzlager 25 ist mittels eines Passstücks 26 in das äußere Mantelrohr 1 an dessen freiem Ende, welches nicht von dem inneren Mantelrohr 2 durchsetzt ist, eingesetzt.

Figur 2 veranschaulicht auch die relative Position des inneren Mantelrohres 2 zu dem äußeren Mantelrohr 1. Die hier dargestellte Position entspricht einer Mittelstellung innerhalb des Verstellbereichs der Axialverstellung, der dem Fahrer zur Anpassung des Lenkradabstandes zur Verfügung steht. Dies ist erkennbar daran, dass eine Spannachse 27 des ansonsten hier nicht sichtbaren Spannapparates 8 mittig in dem Führungsschlitz 10 liegt. Weiter ist in der Position gemäß Figur 2 die Buchse 16 in der Ausnehmung an einem lenkradfernen Ende positioniert. Der Nutenstein ist in der T-Nut 18 unmittelbar anliegend an der Buchse 16 befestigt, so dass die Buchse 16 zwischen dem Ende der Ausnehmung 15 und dem Nutenstein 19 festgelegt ist.

Figur 2 zeigt also eine mittlere Einstellung der Lenksäule bei normalem Betriebszustand.

In der Figur 3, die im wesentlichen der Figur 2 entspricht, ist das innere Mantelrohr 2 gegenüber dem äußeren Mantelrohr 1 nach links in das äußere Mantelrohr 1 hinein verschoben, so dass die Spannachse 27 an dem lenkradnahen Ende des Führungsschlitzes 10 anliegt. Diese Position entspricht einer Axialverstellung durch den Fahrer, bei der das Lenkrad den im normalen Fahrbetrieb größtmöglichen Abstand vom Fahrer aufweist und somit voll eingeschoben ist.

Die Figur 4 zeigt die Lenksäule nach dem so genannten Crashfall, also nach einem Frontalaufprall des Fahrzeugs auf ein Hindernis, bei dem der Fahrer auf das Lenkrad prallt. Ausgehend von der Stellung gemäß Figur 3 ist die Baugruppe aus den Mantelrohren 1 und 2, der Konsole 6 und dem Tragelement 13 nach links verschoben, also in Fahrtrichtung des Fahrzeugs nach vorne. Die Konsole rutscht dabei im Bereich der Ausschnitte 7 aus ihren Befestigungen an der Karosserie. Der Betrag der Verschiebung entspricht der Länge der Ausnehmung 15, was daran erkennbar ist, dass die karosseriefeste Buchse 16 nun am lenkradnahen Ende der Ausnehmung 15 anliegt. Während des Aufpralls verschiebt sich also auch das Tragelement 13 unter dem Einfluss der entstehenden Kraft, welche zumindest mit einer Komponente in Richtung der Längsachse 5 wirkt, gegen die Buchse 16. Der Nutenstein 19 rutscht dabei entlang der T-Nut 18. Die mittels der Gewindeschraube 20 erzeugte Klemmkraft bewirkt dabei eine Reibung des Nutensteins 19 innerhalb der T-Nut 18, die zu einer Energieabsorption führt. Diese Energieabsorption ist gewünscht, da sie den Aufprall des Fahrers auf das Lenkrad dämpft und dadurch das Verletzungsrisiko bei einem Crash verringert.

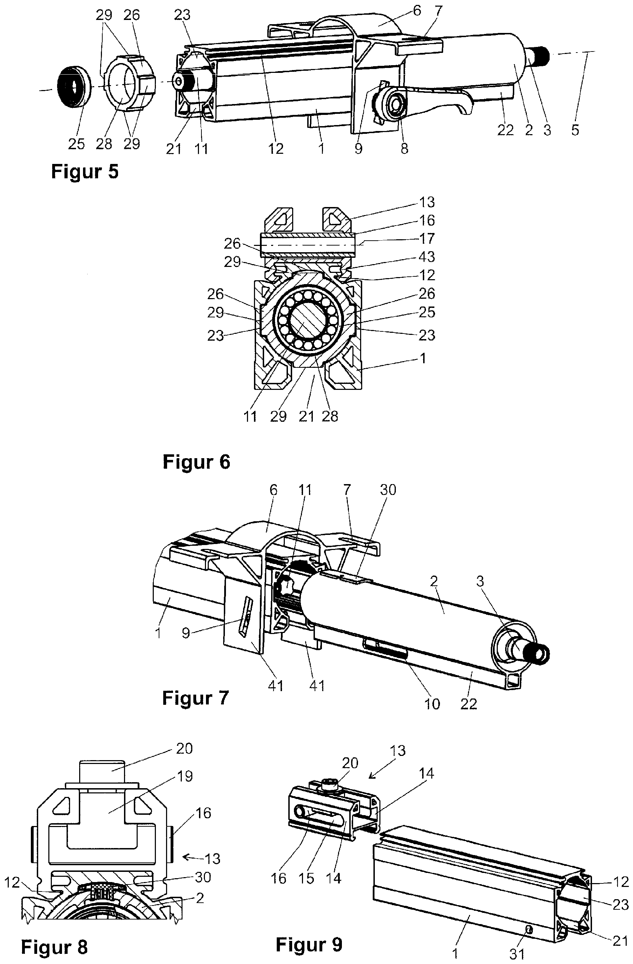

Figur 5 zeigt die Lenksäule in einer perspektivischen Ansicht auf die Lagerung der unteren Lenkspindel 11 in dem äußeren Mantelrohr 1, wobei die Lagerung hier in Explosionsdarstellung vorliegt. Das äußere Mantelrohr 1 ist, wie bereits oben erwähnt, als Strangpressteil gefertigt und weist deshalb einen über seine Längserstreckung in Richtung der Längsachse 5 im wesentlichen gleichförmigen Querschnitt auf, der über die gesamte Länge bzgl. der Längsachse 5 im Wesentlichen erhalten ist, ohne das mittels Zerspanungsoperation größere Abschnitte von dem ursprünglichen Rohling zerspant wurden. Insbesondere ist der Innenraum von einer inneren Umfangsfläche begrenzt, die vier teilzylindrische Flächen und drei dazwischen liegende rechteckige Nuten 23 aufweist. Die teilzylindrischen Flächen bilden eine etwa kreiszylindrische, rohrförmige Führung, in die das innere Mantelrohr 2 eingesetzt ist. Die Nuten 23 und der unten angeordnete Längsschlitz 21 sind in 90° Winkelabstand verteilt und bilden eine kreuzförmige Erweiterung des im Übrigen runden Querschnitts.

In diese lichte Öffnung des äußeren Mantelrohres 1 wird das Passstück 26 eingesetzt, das eine kompatible äußere Umfangsfläche mit Ansätzen 29 aufweist, sowie einen kreiszylindrischen ringförmigen innen angeordneten Lagersitz 28. Der Lagersitz 28 dient zur Aufnahme des Wälzlagers 25. Der Innenring des Wälzlagers 25 wiederum nimmt den Lagersitz der unteren Lenkspindel 11 auf. Somit lagert das Wälzlager 25 die untere Lenkspindel 11 in dem Passstück 26, welche wiederum in dem äußeren Mantelrohr 1 fixiert ist. Aufgrund der Ausformung des äußeren Mantelrohres 1 und des Passstücks 26 als Strangpressteil kann die Positionierung des Passstücks 26 an nahezu beliebiger Stelle innerhalb des äußeren Mantelrohres 1 erfolgen. Die Lagerung ist deshalb für verschiedene Ausführungen, z.B. unterschiedlicher Länge mit Gleichteilen ausführbar.

Figur 6 zeigt einen Querschnitt im Bereich der oben beschriebenen Lagerung. Es ist ersichtlich, dass das Passstück 26 mit den Ansätzen 29 in den Nuten 23 des äußeren Mantelrohres 1 drehfest einliegt und dort beispielsweise durch Kleben fixiert sein kann. Das Tragelement 13 umgreift die Nuten 12 des Mantelrohrs 1 und ist an diesem durch eine Verstemmung 43 fixiert. Dafür wurde eine äußere Nut, die sich an der Außenseite des Tragelements 13 erstreckt, lokal plastisch deformiert, so dass ein Formschluss gebildet wird. Dadurch ist das Tragelement gegenüber dem Mantelrohr 1 unverschiebbar.

Die Figur 7 zeigt eine perspektivische Ansicht der Lenksäule, bei der das innere Mantelrohr 2 aus dem äußeren Mantelrohr 1 heraus gezogen ist. Das innere Mantelrohr 2 ist mit seinem unten angeformten Steg 22 so ausgebildet, dass es allein aufgrund der Form drehfest in das äußere Mantelrohr 1 passt. Weiter trägt das innere Mantelrohr 2 an seiner hinteren Oberseite eine Verdrehsicherung 30. Der Steg weist den Führungsschlitz 10 auf, der von der hier nicht dargestellten Spannachse 27 des Spannapparats 8 durchsetzt ist. Der der Konsole 6 ausgebildete Führungsschlitz 9 entspricht der Bewegungsbahn der Spannachse 27 gegenüber der Konsole 6 bei einem Verstellvorgang in der vertikalen Richtung der Lenksäule im Kraftfahrzeug.

In der Figur 8 ist in einem Querschnitt die Führung des inneren Mantelrohres 2 in dem äußeren Mantelrohr 1 gezeigt. Zugleich zeigt Figur 8 das Tragelement 13 in einer Stirnansicht. Das innere Mantelrohr 2 trägt an seiner Oberseite die Verdrehsicherung 30, die in die obere Nut 23 des äußeren Mantelrohres 1 eingreift. Die Verdrehsicherung 30 kann auch einem selbstschmierenden Kunststoff hergestellt sein. Das Tragelement 13 mit dem darin reibschlüssig angeordneten Nutenstein 19 und der Buchse 16 wurde bereits oben beschrieben.

Figur 9 zeigt das äußere Mantelrohr 1 mit dem Tragelement 13 in getrennter Darstellung vor dem Aufsetzen des Tragelements 13 auf das Mantelrohr 1. In dieser Darstellung ist die Lage einer Bohrung 31 veranschaulicht, die die hier nicht dargestellte Spannachse 27 aufnimmt.

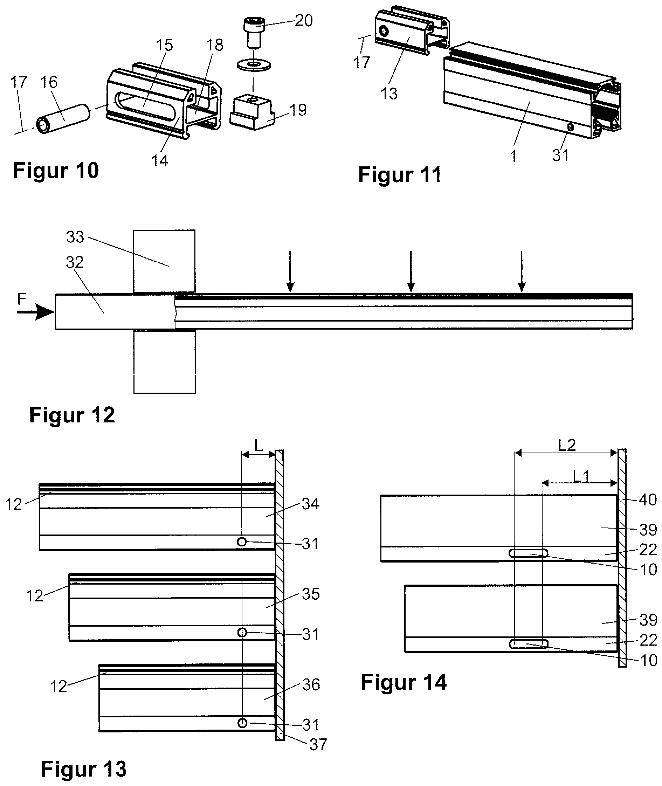

Figur 10 zeigt das Tragelement 13 mit dem Nutenstein 19 und der Buchse 16 in einer Explosionsdarstellung.

Figur 11 zeigt das äußere Mantelrohr 1 mit dem Tragelement 13 ohne Nutenstein und Buchse in einer Darstellung wie in Figur 9.

Figur 12 veranschaulicht ein Herstellungsverfahren des äußeren Mantelrohres 1. Von der linken Seite der Figur her wird unter einer Presskraft F bei erhöhter Temperatur ein Materialstrang 32, zum Beispiel aus einer Aluminiumlegierung oder Magnesiumlegierung, durch eine Form 33 gepresst. Das entstehende Formteil ist dann ein Rohling und hat die Querschnittsform des äußeren Mantelrohres 1. Zur Trennung in einzelne Werkstücke wird das Formteil an den mit Pfeilen gekennzeichneten Stellen getrennt, beispielsweise durch Sägen. Die Länge der Werkstücke kann durch Wahl der Trennstellen variiert werden.

Figur 13 zeigt, wie ein langer Rohling 34, ein mittellanger Rohling 35 und ein kurzer Rohling 36 durch Anbringen von Funktionselementen bearbeitet werden. Die Funktionselemente beschränken sich in diesem Fall auf die Bohrung 31 zur Aufnahme der Spannachse 27. Diese Bohrung wird bei den drei Rohlingen 34, 35 und 36 in dem gleichen Abstand L von der rechten Stirnfläche des jeweiligen Rohlings, hier veranschaulicht durch eine Anlageplatte 37, angebracht. Alle anderen Merkmale des äußeren Mantelrohres 1 sind, wie bereits oben beschrieben wurde, allein durch die Strangpressform erzeugt worden. Die gilt beispielsweise für die Nuten 12 und die anderen, in der Figur 13 nicht sichtbaren Merkmale des inneren Querschnitts. Allein durch das Ablängen der Rohlinge werden verschiedene Bauteillängen realisiert. Das Anbringen der Funktionselemente kann in derselben Vorrichtung erfolgen, da als Bezugsebene ausschließlich die vordere Stirnfläche benutzt wird.

Figur 14 zeigt, wie ein langer Rohling 38 und ein kurzer Rohling 39 durch Anbringen von Funktionselementen jeweils zu einem inneren Mantelrohr 2 bearbeitet werden. Die Funktionselemente beschränken sich in diesem Fall auf den Führungsschlitz 10, der in den Steg 22 eingebracht wird. Dieser Führungsschlitz 10 wird bei den beiden Rohlingen 38 und 39 in dem gleichen Bereich von L1 bis L2 gemessen von der rechten Stirnfläche des jeweiligen Rohlings angebracht, hier veranschaulicht durch eine Anlageplatte 40. Alle anderen Merkmale des inneren Mantelrohres 2 sind, wie sie bereits oben beschrieben wurden, allein durch die Strangpressform erzeugt worden. Dies gilt beispielsweise für den Steg 22 und die anderen, in der Figur 14 nicht sichtbaren Merkmale des inneren Querschnitts.

Allein durch das Ablängen der Rohlinge werden verschiedene Bauteillängen realisiert. Das Anbringen der Funktionselemente kann in derselben Vorrichtung erfolgen, da als Bezugsebene ausschließlich die vordere Stirnfläche benutzt wird.

So können in einheitlicher Aufspannung aus demselben Strangpressteil Komponenten für Lenksäulen verschiedener Längen und damit für verschiedene Fahrzeugplattformen in besonders einfacher und kostengünstiger Weise gefertigt werden.

### Bezugszeichenliste

- 1.: äußeres Mantelrohr
- 2.: inneres Mantelrohr
- 3.: Lenkspindel
- 4.: Wälzlager
- 5.: Längsachse
- 6.: Konsole
- 7.: Ausschnitte
- 8.: Spannapparat
- 9.: Führungsschlitze
- 10.: Führungsschlitz
- 11.: Lenkspindel
- 12.: Nuten
- 13.: Tragelement
- 14.: Seitenwände
- 15.: Ausnehmung
- 16.: rohrförmige Buchse
- 17.: Schwenkachse
- 18.: T-Nut
- 19.: Nutenstein
- 20.: Gewindeschraube
- 21.: Längsschlitz
- 22.: Steg
- 23.: Nut
- 24.: Wälzlager
- 25.: Wälzlager
- 26.: Passstück
- 27.: Spannachse
- 28.: Lagersitz
- 29.: Ansatz
- 30.: Verdrehsicherung
- 31.: Bohrung
- 32.: Materialstrang
- 33.: Form
- 34.: Rohling
- 35.: Rohling
- 36.: Rohling
- 37.: Anlageplatte
- 38.: Rohling
- 39.: Rohling
- 40.: Anlageplatte
- 41.: Seitenwange
- 42.: Verstemmung
- 43.: Verstemmung

## Patentansprüche

1. Lenksäule für ein Kraftfahrzeug mit
- einem Mantelrohr (1) und
- einer in dem Mantelrohr (1) um eine Längsachse (5) drehbar gelagerten Lenkspindel (3, 11) sowie mit
- Befestigungselementen zur karosserieseitigen Befestigung der Lenksäule, und mit
- einem Schwenklager zur Höhenverstellung der Lenksäule, wobei das Schwenklager an einem lenkradfernen Bereich der Lenksäule vorgesehen ist,
**dadurch gekennzeichnet, dass**
- das Schwenklager in einem als separatem Bauteil ausgebildeten Tragelement (13) angeordnet oder ausgebildet ist, welches auf dem Mantelrohr (1) an einer in Richtung der Längsachse (5) verlaufenden Befestigungsstruktur unlösbar befestigt ist.

2. Lenksäule nach Anspruch 1, **dadurch gekennzeichnet, dass** die Befestigungsstruktur einander abgewandte Längsnuten (12) aufweist, in die das Tragelement (13) eingreift.

3. Lenksäule nach Anspruch 2, **dadurch gekennzeichnet, dass** das Tragelement (13) in die Nuten (12) eingreift und den zwischen den Nuten (12) liegenden äußeren Abschnitt des Mantelrohrs (1) umgreift.

4. Lenksäule nach einem der vorhergehenden Ansprüche, **dadurch gekennzeichnet, dass** das Tragelement (13) mit dem Mantelrohr (1) verstemmt, verpresst, verschweisst oder verklebt ist.

5. Lenksäule nach einem der vorhergehenden Ansprüche 2 bis 4, **dadurch gekennzeichnet, dass** das Tragelement (13) Seitenwände (14) aufweist, die sich in montiertem Zustand von den Nuten (12) weg erstrecken und die mit Flachseiten parallel einer Längsachse (5) sowie mit kurzen Stirnseiten quer zu der Längsachse (5) orientiert sind.

6. Lenksäule nach Anspruch 5, **dadurch gekennzeichnet, dass** die Seitenwände (14) jeweils mit einer länglichen Ausnehmung (15) versehen sind, deren Längserstreckung parallel zu der Längsachse (5) orientiert ist.

7. Lenksäule nach Anspruch 6, **dadurch gekennzeichnet, dass** in den Ausnehmungen (15) quer zu der Längsachse (5) eine rohrförmige Buchse (16) angeordnet ist, die eine Schwenkachse (17) definiert, die als Befestigungselement für die Befestigung der Lenksäule in diesem Bereich an dem Kraftfahrzeug eingerichtet ist, und die in montiertem Zustand als Lagerachse für die Vertikalverschwenkung der Lenksäule im Betrieb dient.

8. Lenksäule nach einem der vorhergehenden Ansprüche 5 bis 7, **dadurch gekennzeichnet, dass** zwischen den Seitenwänden (14) in dem Tragelement (13) eine Führungsnut vorgesehen ist, in der ein Gleitstein mit Reibung geführt ist.

9. Lenksäule nach Anspruch 8, **dadurch gekennzeichnet, dass** die Führungsnut eine T-Nut (18) und dass der Gleitstein ein Nutenstein (19) ist.

10. Lenksäule nach Anspruch 8 oder 9, **dadurch gekennzeichnet, dass** der Gleitstein mit einem Befestigungsmittel in der Führungsnut befestigbar ist.

11. Lenksäule nach einem der vorhergehenden Ansprüche 8 bis 10, **dadurch gekennzeichnet, dass** der Gleitstein derart in einen Bereich zwischen den Ausnehmungen (15) ragt, dass die Buchse (16) bei einer Bewegung in Richtung der Längsachse (5) innerhalb der Ausnehmungen (15) den Gleitstein mitnimmt.

12. Verfahren zur Herstellung einer Lenksäule für ein Kraftfahrzeug, wobei die Lenksäule ein Mantelrohr (1), in dem eine Lenkspindel (3, 11) um eine Längsachse (5) drehbar gelagert ist, und ein Tragelement (13) umfasst, wobei das Mantelrohr (1) eine in Richtung der Längsachse (5) verlaufende, Längsnuten (12) umfassende Befestigungsstruktur aufweist und wobei das Tragelement (13) parallele Schienen aufweist, mit den Verfahrensschritten:
a) Bereitstellen des Mantelrohrs (1)
b) Einschieben des Tragelements (13) mit seinen Schienen in die Längsnuten (12)
c) Positionieren des Tragelements (13) an einer vordefinierten Längsposition
d) Fixieren des Tragelements (13) an der positionierten Längsposition.

13. Verfahren zur Herstellung einer Lenksäule entsprechend Patentanspruch 12, **dadurch gekennzeichnet dass**, folgende weitere Verfahrensschritte zur Herstellung der Lenksäule vorgesehen sind:
- Anfertigen eines einzelnen Rohlings des Mantelrohres (1) in einem Strangpressverfahren,
- Ablängen des einzelnen Rohlings auf eine erforderliche Bauteillänge zur Darstellung des Mantelrohrs, dass entsprechend dem Patentanspruch 12 zur Lenksäule komplettiert wird.

## Claims

1. Steering column for a motor vehicle, comprising
- a casing tube (1) and
- a steering spindle (3, 11) which is mounted in the casing tube (1) so as to be rotatable about a longitudinal axis (5), and comprising
- fastening elements for fastening the steering column on the vehicle body, and with
- a pivot bearing for the height adjustment of the steering column, wherein the pivot bearing is provided on a region of the steering column that is remote from the steering wheel,
**characterized in that**
- the pivot bearing is arranged or formed in a supporting element (13) which is designed as a separate component and is fastened non-releasably on the casing tube (1) to a fastening structure which runs in the direction of the longitudinal axis (5).

2. Steering column according to Claim 1, **characterized in that** the fastening structure comprises longitudinal grooves (12) which face away from each other and in which the supporting element (13) engages.

3. Steering column according to Claim 2, **characterized in that** the supporting element (13) engages in the grooves (12) and engages around the outer portion of the casing tube (1), said outer portion lying between the grooves (12).

4. Steering column according to one of the preceding claims, **characterized in that** the supporting element (13) is calked, pressed, welded or adhesively bonded to the casing tube (1).

5. Steering column according to one of the preceding Claims 2 to 4, **characterized in that** the supporting element (13) comprises side walls (14) which, in the mounted state, extend away from the grooves (12) and which are oriented with flat sides parallel to a longitudinal axis (5) and with short end sides transversely with respect to the longitudinal axis (5).

6. Steering column according to Claim 5, **characterized in that** the side walls (14) are each provided with an elongate recess (15), the longitudinal extent of which is oriented parallel to the longitudinal axis (5).

7. Steering column according to Claim 6, **characterized in that** a tubular bushing (16) is arranged in the recesses (15) transversely with respect to the longitudinal axis (5), said tubular bushing defining a pivot axis (17) which is configured as a fastening element for fastening the steering column in this region to the motor vehicle and which, in the mounted state, serves as a bearing axis for the vertical pivoting of the steering column during operation.

8. Steering column according to one of the preceding Claims 5 to 7, **characterized in that** a guide groove in which a sliding member is guided with friction is provided in the supporting element (13) between the side walls (14).

9. Steering column according to Claim 8, **characterized in that** the guide groove is a T groove (18), and **in that** the sliding member is a sliding block (19).

10. Steering column according to Claim 8 or 9, **characterized in that** the sliding member is fastenable in the guide groove with a fastening means.

11. Steering column according to one of the preceding Claims 8 to 10, **characterized in that** the sliding member projects into a region between the recesses (15) in such a manner that the bushing (16) carries along the sliding member during a movement in the direction of the longitudinal axis (5) within the recesses (15).

12. Method for producing a steering column for a motor vehicle, wherein the steering column comprises a casing tube (1) in which a steering spindle (3, 11) is mounted so as to be rotatable about a longitudinal axis (5), and a supporting element (13), wherein the casing tube (1) comprises a fastening structure running in the direction of the longitudinal axis (5) and comprising longitudinal grooves (12), and wherein the supporting element (13) comprises parallel rails, with the method steps:
a) providing the casing tube (1)
b) pushing the supporting element (13) with its rails into the longitudinal grooves (12)
c) positioning the supporting element (13) at a predefined longitudinal position
d) fixing the supporting element (13) at the positioned longitudinal position.

13. Method for producing a steering column in accordance with Patent Claim 12, **characterized in that** the following further method steps for producing the steering column are provided:
- producing an individual blank of the casing tube (1) in an extrusion process,
- cutting the individual blank to a required component length in order to produce the casing tube which, in accordance with Patent Claim 12, is completed to form the steering column.

## Revendications

1. Colonne de direction pour un véhicule automobile, comprenant
- un tube d'enveloppe (1) et
- un arbre de direction (3, 11) supporté à rotation autour d'un axe longitudinal (5) dans le tube d'enveloppe (1), et
- des éléments de fixation pour la fixation, du côté de la carrosserie, de la colonne de direction, et
- un palier pivotant pour le réglage en hauteur de la colonne de direction, le palier pivotant étant prévu au niveau d'une région de la colonne de direction éloignée du volant de direction,
**caractérisée en ce que**
- le palier pivotant est disposé ou est réalisé dans un élément de support (13) réalisé sous forme de composant séparé, qui est fixé sur le tube d'enveloppe (1) de manière imperdable au niveau d'une structure de fixation s'étendant dans la direction de l'axe longitudinal (5).

2. Colonne de direction selon la revendication 1, **caractérisée en ce que** la structure de fixation présente des rainures longitudinales (12) détournées les unes des autres, dans lesquelles s'engage l'élément de support (13).

3. Colonne de direction selon la revendication 2, **caractérisée en ce que** l'élément de support (13) s'engage dans les rainures (12) et vient en prise autour de la portion extérieure du tube d'enveloppe (1) située entre les rainures (12).

4. Colonne de direction selon l'une quelconque des revendications précédentes, **caractérisée en ce que** l'élément de support (13) est maté, pressé, soudé ou collé au tube d'enveloppe (1).

5. Colonne de direction selon l'une quelconque des revendications précédentes 2 à 4, **caractérisée en ce que** l'élément de support (13) présente des parois latérales (14) qui s'étendent à l'écart des rainures (12) dans l'état monté, et qui sont orientées avec des côtés plats parallèlement à un axe longitudinal (5) et avec des côtés frontaux courts transversalement à l'axe longitudinal (5).

6. Colonne de direction selon la revendication 5, **caractérisée en ce que** les parois latérales (14) sont à chaque fois pourvues d'un évidement allongé (15), dont l'étendue longitudinale est orientée parallèlement à l'axe longitudinal (5).

7. Colonne de direction selon la revendication 6, **caractérisée en ce que** dans les évidements (15) transversalement à l'axe longitudinal (5), est disposée une douille tubulaire (16) qui définit un axe de pivotement (17) qui est prévu en tant qu'élément de fixation pour la fixation de la colonne de direction dans cette région au véhicule automobile, et qui, dans l'état monté, sert d'axe de palier pour le pivotement vertical de la colonne de direction pendant le fonctionnement.

8. Colonne de direction selon l'une quelconque des revendications précédentes 5 à 7, **caractérisée en ce qu'**entre les parois latérales (14) dans l'élément de support (13) est prévue une rainure de guidage dans laquelle est guidé avec friction un coulisseau.

9. Colonne de direction selon la revendication 8, **caractérisée en ce que** la rainure de guidage est une rainure en T (18) et **en ce que** le coulisseau est un coulisseau à rainure (19).

10. Colonne de direction selon la revendication 8 ou 9, **caractérisée en ce que** le coulisseau peut être fixé dans la rainure de guidage avec un moyen de fixation.

11. Colonne de direction selon l'une quelconque des revendications précédentes 8 à 10, **caractérisée en ce que** le coulisseau pénètre dans une région entre les évidements (15) de telle sorte que la douille (16) entraîne le coulisseau lors d'un déplacement dans la direction de l'axe longitudinal (5) à l'intérieur des évidements (15).

12. Procédé de fabrication d'une colonne de direction pour un véhicule automobile, la colonne de direction comprenant un tube d'enveloppe (1) dans lequel un arbre de direction (3, 11) est supporté à rotation autour d'un axe longitudinal (5), et un élément de support (13), le tube d'enveloppe (1) présentant une structure de fixation s'étendant dans la direction de l'axe longitudinal (5) et comprenant des rainures longitudinales (12), et l'élément de support (13) présentant des rails parallèles, comprenant les étapes de procédé suivantes :
a) fourniture du tube d'enveloppe (1)
b) insertion de l'élément de support (13) avec ses rails dans les rainures longitudinales (12)
c) positionnement de l'élément de support (13) au niveau d'une position longitudinale prédéfinie
d) fixation de l'élément de support (13) au niveau de la position longitudinale positionnée.

13. Procédé de fabrication d'une colonne de direction selon la revendication 12, **caractérisé en ce que** les étapes de procédé supplémentaires suivantes pour la fabrication de la colonne de direction sont prévues :
- fabrication d'une ébauche individuelle du tube d'enveloppe (1) dans un procédé d'extrusion,
- découpage de l'ébauche individuelle à une longueur de composant requise pour constituer le tube d'enveloppe, qui est complété selon la revendication 12 pour former la colonne de direction.
